# EUROPÄISCHE PATENTSCHRIFT

(11) **EP 0 666 880 B1**
(45) Veröffentlichungstag und Bekanntmachung des Hinweises auf die Patenterteilung: **14.10.1998**
(21) Anmeldenummer: 94924189.7
(22) Anmeldetag: 12.08.1994
(51) Int. Cl.: C08G 18/22

(54) **KATALYSATOREN ZUR HERSTELLUNG VON POLYURETHANEN UND/ODER POLYHARNSTOFFEN**
CATALYST FOR THE PRODUCTION OF POLYURETHANES AND/OR POLYUREAS
CATALYSEURS POUR LA FABRICATION DE POLYURETHANNES ET/OU DE POLYUREES

(30) Priorität: 02.09.1993 DE 4329624
(43) Veröffentlichungstag der Anmeldung: 16.08.1995
(73) Patentinhaber: AIR PRODUCTS AND CHEMICALS, INC., Allentown, PA 18195-1501 (US)
(72) Erfinder: DIBLITZ, Klaus, D-22869 Schenefeld (DE); FINMANS, Peter, D-46244 Bottrop (DE)
(74) Vertreter: Kador & Partner
(86) Internationale Anmeldenummer: DE9400937
(87) Internationale Veröffentlichungsnummer: WO9506673

(56) Entgegenhaltungen:
- EP-A- 0 294 161
- GB-A- 770 526
- GB-A- 2 064 567
- US-A- 5 244 931

## Beschreibung

Die Erfindung betrifft Katalysatoren zur Herstellung von Polyurethanen und/oder Polyharnstoffen und insbesondere zur Herstellung solcher Schäume.

Es ist bekannt, daß eine Vielzahl organischer, metallorganischer und anorganischer Verbindungen als Katalysatoren bei der Herstellung von Polyurethanen dienen können (J.H. Saunders und K.C. Frisch, Polyurethanes Chemistry and Technology, S. 73 ff, 1962). Aus der Gruppe der organischen Verbindungen wird auf tertiäre Amine wie Bis(dimethylaminoethyl)ether (US-Patentschrift 3 400 157), Aminoorthoester (US-Patentschrift 3 786 029) und β,β'-Dimorpholinodiethylester (DE-Offenlegungsschrift 2 138 403) hingewiesen. Weitere katalytisch aktive Substanzen können Derivate organischer Säuren wie Kaliumacetat oder Kalium-2-ethylhexanoat sein. Beispiele für Metallkatalysatoren sind Sn(II)/Sn(IV)-Salze oder Fe(III)-Salze (DE-Offenlegungsschrift 3 938 203).

Die derzeit eingesetzten Katalysatoren besitzen eine Vielzahl von Nachteilen. Amine wie Bis(dimethylaminoethyl)ester oder Triethylendiamin besitzen einen negativen Einfluß auf die zur Kaschierung von Polyurethanschäumen eingesetzten Folien aus Polyvinylchlorid, z.B. durch Verfärbung der Folien sowie Beeinträchtigung der mechanischen Eigenschaften, wie der Elastizität der Folien (R.L. Zimmerman, T.H. Austin, J. Cell. Plast., 24(3), 256-65, 1988). Die Ursache für diese Effekte ist in der Migration der Aminkatalysator in die Folie zu sehen. Dort bewirken sie eine Abspaltung von Salzsäure aus dem Polymer. Die dabei entstehenden Polyolefine führen zu einer Verfärbung und zu einer höheren Vernetzung, was eine Abnahme der Elastizität bedeutet und zur unerwünschten Versprödung führt.

Setzt man Aminkatalysatoren mit gegenüber der Isocyanatgruppe reaktionsfähigen Substituenten ein, können die oben beschriebenen unerwünschten Effekte zwar in Einzelfällen gemindert werden (R.L. Zimmerman, T.H. Austin, J. Cell. Plast., wie oben). Jedoch wird völlige Verfärbungsfreiheit und vollständiger Erhalt der Folieneigenschaften nicht erreicht (A. Christfreund, E. Huygens, B. Eling, Cell. Polym., 10(6), 452-65, 1991 und R.G. Petrella, J.D. Tobias, J. of Cellular Plastics, 25, 421-40, 1989).

Setzt man andere als Aminkatalysatoren zur Herstellung von geschäumten Polyurethan- und/oder Polyharnstoffen ein, treten ebenfalls gravierende Nachteile auf. Dies gilt beispielsweise für metallorganische Verbindungen wie Dibutylzinndilaurat DBTL (C.B.G. Colvin, Cell. Polym., 11(1), 29-56, 1992) in Bezug auf die Folienverfärbung.

Alkali- oder Erdalkalisalze der Carbonsäuren sind als Katalysatoren zur Polyurethankatalyse an sich bekannt. Die GB 770,526 beschreibt z.B. die Umsetzung von tri-funktionalen Alkyden mit Isocyanaten in Gegenwart solcher Katalysatoren zu Polyurethanen. Als Katalysatoren hierfür sind u.a. offenbart: das Natriumsalze der Essigsäure, der Bernsteinsäure und der Milchsäure sowie das Kaliumsalz der Essigsäure, der Citronensäure, der Naphthensäure und der Ethylmilchsäure.

Die EP-A- 0 294 161 beschreibt die Umsetzung von Polyolen mit Isocyanaten in Gegenwart von Katalysatoren zu Polyurethanen. Als Katalysatoren werden Alkali- oder Erdalkali-Salze von Verbindungen des Typs R-A-COOH offenbart, worin R eine R'OCO-, R'COO- oder R'O- Gruppe, A eine divalente Alkylgruppe und R' eine Alkyl-Gruppe darstellen.

Ebenfalls ein Nachteil ist die Verwendung von Metallsalzen von Carbonsäuren. Es ist bekannt, daß bei der Herstellung von zelligen Polyurethan- und/oder Polyharnstoffen die richtige katalytische Steuerung der Reaktion von Isocyanaten mit hydroxytragenden Gruppen, etwa Polyolen oder Kettenverlängerern, sowie der Reaktion von Isocyanaten mit Wasser von wesentlicher Bedeutung ist. Es ist weiter bekannt, daß Metallsalze von Carbonsäuren wie Kaliumacetat zwar die Treibreaktion Isocyanat/Wasser gut katalysieren (J. Bechara, J. Cell. Plast. (March/April) 103, 1979), jedoch die wichtige Gelierreaktion Isocyanat/ Polyol bzw. Kettenverlängerer nur unzureichend katalysieren.

In der Praxis werden bei unausgewogener Katalyse der Treib- und Gelierreaktion die für die Herstellung der Formteile aus polyurethanhinterschäumtem Polyvinylchlorid wichtigen Verarbeitungsparameter wie die Creme- oder Startzeit, die Gelierzeit und die Steigzeit nicht erreicht. Kaliumacetat bewirkt als Katalysator zwar die Einstellung einer der Technik genügenden Cremezeit. Die Gelierzeit ist aber viel zu kurz, was zu einem unzureichenden Fließverhalten der Polyurethanschaummasse führt. Kalium-2-ethylhexanoat hingegen ermöglicht ebenfalls die Einstellung einer der Technik genügenden Cremezeit, führt jedoch zu viel zu langen Gelier- und Steigzeiten.

Ein weiterer Nachteil der Metallsalze von Carbonsäuren ist deren beschränktes Lösungsvermögen in zur Herstellung von zelliger Polyurethanen und/oder Harnstoffen geeigneten Polyolformulierungen. Diese auch als A-Komponente bezeichneten Rezepturen bestehen typisch aus einem oder mehreren Polyolen, wenn nötig einem oder mehreren Kettenverlängerern sowie Zellstabilisatoren und Wasser, sowie gegebenenfalls weiteren Zuschlag- und Füllstoffen. Eine solche Mischung hat aufgrund ihres unpolaren Charakters ein nur eingeschränktes Lösevermögen gegenüber stark polaren Verbindungen wie den oben genannten Salzen. Dies führt zu einer teilweisen oder vollständigen Ausfällung der oben genannten Carbonsäuresalze, was wiederum zu einer starken Abnahme der Aktivität führt.

Der Erfindung liegt die Aufgabe zugrunde, neue Katalysatoren zur Herstellung von Polyurethanen und Polyharnstoffen zu entwickeln, welche die oben genannten Nachteile nicht aufweisen.

Diese Aufgabe wird gemäß Anspruch 1 durch Bereitstellung von Katalysatoren bestehend aus Alkalimetall- und Erdalkalimetallsalzen von Alkyl- oder Alkenylbernsteinsäuren gelöst.

Gegenstand der Erfindung ist insbesondere der Einsatz dieser Verbindungen als Katalysatoren zur Herstellung von zelligen Urethan- und/oder Harnstoffgruppen aufweisenden Polymeren.

Die hierfür bereitgestellten Bernsteinsäure-Verbindungen I und II besitzen die folgende chemische Struktur: 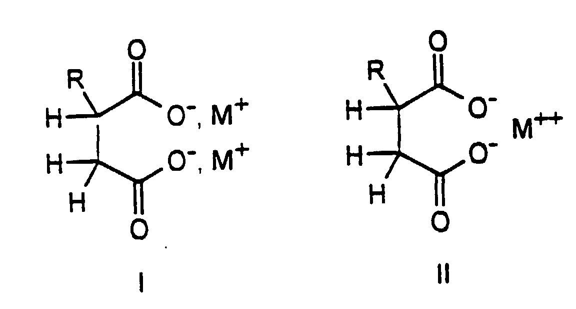 in welchen
R eine verzweigte oder unverzweigte Alkylgruppe mit 1 bis 30 Kohlenstoffatomen, eine verzweigte oder unverzweigte Alkenylgruppe mit 2 bis 30 Kohlenstoffatomen oder eine verzweigte oder unverzweigte Alkylether- oder Alkenylethergruppe mit 2 bis 30 Kohlenstoffatomen und 1 bis 6 Sauerstoffatomen bedeutet. M⁺ steht für ein Metallkation der ersten Hauptgruppe des Periodensystems und M⁺⁺ für ein Metallkation der zweiten Hauptgruppe des Periodensystems.

Bei den erfindungsgemäßen angewendeten Verbindungen der allgemeinen Formel I und II 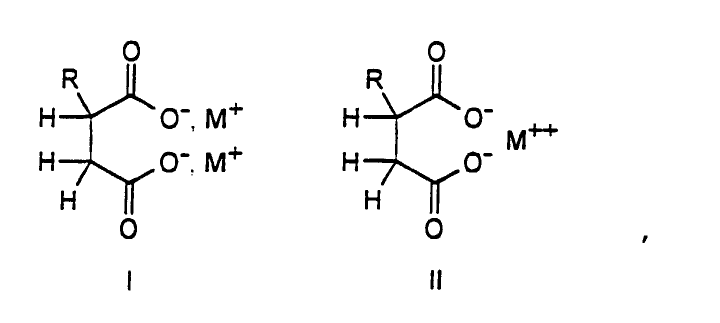 steht R bevorzugt für eine verzweigte oder unverzweigte Alkyl-gruppe mit 1 bis 20, insbesondere 1 bis 10 Kohlenstoffatomen, eine verzweigte oder unverzweigte Alkenylgruppe mit 2 bis 20, insbesondere 2 bis 10 Kohlenstoffatomen, oder eine verzweigte oder unverzweigte Alkylether- oder Alkenylethergruppe mit 2 bis 20, insbesondere 2 bis 10 Kohlenstoffatomen und 1 bis 3 Sauerstoffatomen. M⁺ steht bevorzugt für das Natriumkation und das Kaliumkation. M⁺⁺ steht bevorzugt für das Calciumkation und das Magnesiumkation. Besonders bevorzugt sind das Kaliumkation für M⁺ und das Magnesiumkation für M⁺⁺.

Die erfindungsgemäßen Katalysatoren und Mischungen davon weisen als Katalysatoren überraschende Eigenschaften auf:
1 - die Katalysatoren besitzen eine ausreichend hohe Aktivität;
2 - die Katalysatoren in Polyurethan/Polyharnstoffsystemen zur Hinterschäumung von Polyvinylchloridfolien eingesetzt verursachen keinerlei Verfärbung und Beeinträchtigung der physikalischen Eigenschaften der Folien;
3 - Die Katalysatoren haben hohe Gelieraktivität und bewirken daher die in der Praxis geforderte hohe Zugfestigkeit des Schaums;
4 - die Katalysatoren sind in der Mischung aus Polyolen und weiteren Zuschlagstoffen löslich und lagerstabil;
5 - die Katalysatoren vermögen die Zellstruktur der Schäume vorteilhaft zu beeinflussen.

Die erfindungsgemäßen Katalysatoren sind durch die Umsetzung entsprechend substituierter Bernsteinsäuren oder deren Anhydride mit Hydroxidsalzen der Metalle der ersten oder zweiten Hauptgruppe erhältlich.

Beispiele für geeignete Alkyl- oder Alkenylbernsteinsäuren oder -anhydride sind
(Diisobutenyl)bernsteinsäure/anhydrid, n-Hexenylbernsteinsäure/ anhydrid, n-Dodecenylbernsteinsäure/anhydrid, (Tetrapropenyl)bernsteinsäure/anhydrid, (Polyisobutenyl)bernsteinsäure/ anhydrid, (Diisobutyl)bernsteinsäure/anhydrid, n-Hexylbernsteinsäure/anhydrid, n-Dodecylbernsteinsäure/anhydrid, (Tetrapropyl)bernsteinsäure/anhydrid, (Polyisobutyl)bernsteinsäure/anhydrid.

Beispiele für geeignete Hydroxidsalze der Metalle sind Lithiumhydroxid, Natriumhydroxid, Kaliumhydroxid, Magnesiumhydroxid, Calciumhydroxid und Bariumhydroxid.

Die beanspruchten Verbindungen eignen sich insbesondere zur Herstellung von zelligen Polyurethanen, wobei die erfindungsgemäßen Katalysatoren allein, in Kombination miteinander oder mit für die Herstellung von Polyurethanen und Polyharnstoffen geeigneten handelsüblichen Katalysatoren eingesetzt werden können. Solche handelsüblichen Katalysatoren können aus der Gruppe der tertiären Amine, Phosphorverbindungen und Metallverbindungen stammen.

Als Beispiele handelsüblicher Katalysatoren seien die folgenden Aminkatalysatoren genannt:
Triethylendiamin, Bis(dimethylaminoethyl)ether, Dimethylcyclohexylamin, Dimethylbenzylamin, Dimethylethanolamin, N-Methylmorpholin, N-Ethylmorpholin, Dimorpholinodiethylether, Tetramethylhexamethylendiamin, 2-Methyl-2-azanorboran, 2-(Hydroxyethoxyethyl)-2-azanorbornan, 2-(2-Dimethylaminoethoxy)ethanol, 3-Dimethylaminopropyl-diisopropanolamin, Bis(3-dimethylaminopropyl)-isopropanolamin und 2-Dimethylaminoethyl-3-dimethylaminopropylether.

Als Beispiele handelsüblicher Metallkatalysatoren sind die folgenden genannt:
Metallsalze, vorzugsweise Zinn, einer Carbonsäure und gemischte Alkyl- und Carbonsäurederivate eines Metalls. So können z.B. Dibutylzinndilaurat, Dibutylzinndiacetat, Diethylzinndiacetat, Zinndioktoat sowie Gemische davon eingesetzt werden.

Weiter ist der Zusatz eines Schaumstabilisators möglich, insbesondere solche aus der Klasse der Silane oder Siloxane (US-Patentschrift 3 194 773).

Zur Herstellung geschäumter Polyurethane mit den erfindungsgemäßen Katalysatoren können beispielsweise die folgenden Polyisocyanate eingesetzt werden:
Hexamethylendiisocyanat, Phenylendiisocyanat, Toluylendiisocyanat, Isophorondiisocyanat, Naphthylendiisocyanat und 4,4'-Diphenylmethandiisocyanat. Besonders geeignet sind 2,4-Toluylendiisocyanat oder 2,6-Toluylendiisocyanat sowie Mischungen daraus. Weitere geeignete Polyisocyanate sind kommerziell erhältliche Mischungen, bekannt als "crude-MDI", welche etwa 60% des 4,4'-Diphenylmethandiisocyanats sowie isomere oder analoge höhermolekulare Polyisocyanate enthalten. Besonders geeignet sind ebenfalls Mischungen aus Toluylendiisocyanat und 4,4'-Diphenylmethandiisocyanat sowie den als "crude-MDI" bekannten Polyisocyanaten. Ebenfalls geeignet sind "Prepolymere" der oben genannten Polyisocyanate, bestehend aus den Umsetzungsprodukten von Polyisocyanaten und Polyether- oder Polyesterpolyolen.

Die mit den Polyisocyanaten reaktionsfähige Polyolkomponente kann ein Polyesterpolyol oder ein Polyetherpolyol sein. Geeignete Polyole sind z.B. Polyalkylen- oder Polyesterpolyole. Besonders geeignete Polyalkylenpolyole umfassen Polyalkylenoxidpolymere, wie etwa Polyethylenoxid- und Polypropylenoxidpolymere sowie gemischt polymerisierte Polyethylen- und Polypropylenoxidpolymere. Startverbindungen für solche Polyalkylenpolyole sind beispielsweise Ethylenglycol, Propylenglycol, 1,3-Butandiol, 1,4-Butandiol, 1,6-Hexandiol, Neopentylglycol, Diethylenglycol, Dipropylenglycol, Pentaerithritol, Glycerin, Diglycerin, Trimethylolpropan, Cyclohexandiol, Sucrose und Saccharose.

Geeignete Polyesterpolyole umfassen die Reaktionsprodukte aus Dicarbonsäuren mit einem Überschuß an Diolen z.B. Adipinsäure mit Ethylenglycol oder Butandiol oder den Reaktionsprodukten aus Lactonen mit einem Überschuß an einem Diol, z.B. Caprolacton und Propylenglycol.

Die erfindungsgemäßen Katalysatoren sind auch in Kombination mit anderen Katalysatoren einsetzbar, insbesondere in Kombinationen mit tertiären Aminen, bevorzugt solchen, welche mindestens einen Substituenten mit mindestens einem gegenüber der Isocyanatgruppe reaktiven Wasserstoff enthält. Besonders bevorzugt sind Dimethylethanolamin, Dimethylaminopropylamin, 2-(Hydroxyethoxyethyl)-2-azanorbornan, 2-(2-Dimethylaminoethoxy)-ethanol und 3-Dimethylaminopropyl-diisopropanolamin. Auch sind Kombinationen mit Metallkatalysatoren geeignet, vorzugsweise Zinnverbindungen einer Carbonsäure und/oder gemischte Alkyl- und Carbonsäurederivate vom Zinn. Besonders bevorzugt sind Dibutylzinndilaurat, Dibutylzinndiacetat, Diethylzinndiacetat, Zinndioktoat sowie Gemische davon.

Die folgenden Beispiele dienen der Erläuterung der Erfindung.

### Beispiel 1

### Tetrapropenylbernsteinsäuredikaliumsalz

Es wurden 16 g Kaliumhydroxid, 53,04 g Ethylenglycol und 37,04 g Tetrapropenylbernsteinsäureanhydrid in einen Glaskolben überführt. Die Mischung wurde zwei Stunden bei 100 °C gerührt.
Ausbeute: 103 g = 97,1 % d. Theorie.
Die erhaltene Katalysatorlösung ist hygroskopisch. Der Wassergehalt ist daher 3,1 % gegenüber 2,5 % d. Theorie.

### Beispiel 2

### Hexenylbernsteinsäuredikaliumsalz

Es werden 16 g Kaliumhydroxid, 41,5 g Ethylenglycol und 25,5 g Hexenylbernsteinsäureanhydrid in einen Glaskolben überführt. Die Mischung wird zwei Stunden bei 100 °C gerührt.
Ausbeute: 78,9 g = 98,0 % d. Theorie.
Die entstehende Katalysatorlösung ist hygroskopisch.

### Beispiel 3

Verwendung der unter Beispiel 1 und 2 beschriebenen Verbindungen als Katalysatoren bei der Herstellung von Polyetherweichschaum (TDI/MDI Kaltschaumformulierung).

Die Herstellung des Polyetherweichschaums erfolgte nach dem Handmischverfahren. Dabei wurde zuerst die A-Komponente, sie enthielt ein geeignetes Polyol, einen Schaumstabilisator, den erfindungsgemäßen Katalysator sowie Wasser als Treibmittel, mit einem Hochleistungsrührer bei 5000 U/min 30 s gerührt. Anschließend gab man die benötigte Menge eines geeigneten Polyisocyanates hinzu, rührte 3 s bei 5000 U/min und schüttete das schaumfähige Gemisch in eine würfelförmige Form (Kantenlänge 27 cm). Es wurden mittels eines mit einer Ultraschallmeßsonde gekoppelten Meßdatenerfassungssystems die Steigkurven aufgezeichnet. Aus den so erhaltenen Steigkurfen konnten die Cremezeiten sowie die Steigzeiten und Steighöhen ermittelt werden.

Zur Verschäumung wurde die folgende Rezeptur verwendet:

| | |
|---|---|
| Polyol (a) | 100,0 g |
| Diethanolamin | 1,00 g |
| Isocyanat (b) | 37,8 g |
| Wasser | 3,0 g |
| Stabilisator (c) | 0,8 g |
| Katalysator | siehe Tabelle I |
| Index | 100 |
| (a) verzweigtes Polyol mit einer OH-Zahl von 26-30 und einer mittleren Molmasse von 6000 g/mol | |
| (b) Gemisch aus 80 Gew.% Toluydendiisocyanat (TDI) mit 80 Gew.% 2,4-Isomeren und 20 Gew.% 2,6-Isomeren und 20 Gew.% Methylendiphenyldiisocyanat (MDI) | |
| (c) Polyethersiloxan | |

**Tabelle I:**

| Kennwerte der Verschäumung | | | | | | | |
|---|---|---|---|---|---|---|---|
| Katalysator | Menge | Cremezeit | Gelierzeit, Beginn | Gelierzeit, Ende | Steigzeit | Dichte | Temperatur |
| | [pphp] | [s] | [s] | [s] | [s] | [kg/m³] | [°C] |
| I (1) | 1,5 | 6 | 35 | 42 | 116 | 34,3 | 22 |
| II (2) | 1,5 | 6 | 29 | 35 | 100 | 33,8 | 22 |
| III (3) | 1,5 | 7 | 20 | 24 | 52 | 35,1 | 22 |
| IV (4) | 1,5 | 5 | 51 | 69 | 249 | 32,3 | 22 |

**Tabelle II:**

| Einfluß des Katalysators auf die Zugfestigkeit (gemessen nach DIN 53571) des Schaums | |
|---|---|
| Katalysator | Zugfestigkeit [kPa] |
| I (1) | 90 |
| II (2) | 90 |
| III (3) | 52 |
| IV (4) | 72 |

| | |
|---|---|
| (1) erfindungsgemäßer Katalysator nach Beispiel 1 | |
| (2) erfindungsgemäßer Katalysator nach Beispiel 2 | |
| (3) Kaliumacetat | |
| (4) Kalium-2-ethylhexanoat | |

Aus Tabelle II ist ersichtlich, daß insbesondere die für die Belastung und Haltbarkeit der geschäumten Bauteile besonders ausschlaggebende Zugfestigkeit bei der Verwendung der erfindungsgemäßen Katalysatoren I und II gegenüber den Katalysatoren des Standes der Technik besonders verbessert wird.

### Beispiel 4

Verwendung der unter Beispiel 1 und 2 beschriebenen Verbindungen als Katalysatoren bei der Herstellung von Polyetherweichschaum (all-MDI Kaltschaumformulierung).

Die Herstellung des Polyetherweichschaums erfolgte nach dem Handmischverfahren. Dabei wurde zuerst die A-Komponente, sie enthielt ein geeignetes Polyol, einen Schaumstabilisator, den erfindungsgemäßen Katalysator sowie Wasser als Treibmittel, mit einem Hochleistungsrührer bei 5000 U/min 30 s gerührt. Anschließend gab man die benötigte Menge eines geeigneten Polyisocyanates hinzu, rührte 3 s bei 5000 U/min und schüttete das schaumfähige Gemisch in eine würfelförmige Form (Kantenlänge 27 cm). Es wurden mittels eines mit einer Ultraschallmeßsonde gekoppelten Meßdatenerfassungssystems die Steigkurven aufgezeichnet. Aus den so erhaltenen Steigkurven konnten die Cremezeiten sowie die Steigzeiten und Steighöhen ermittelt werden.

Zur Verschäumung wurde die folgende Rezeptur verwendet:

| | |
|---|---|
| Polyol (a) | 100,0 g |
| Diethanolamin | 1,00 g |
| Isocyanat (d) | 52,0 g |
| Wasser | 3,0 g |
| Stabilisator (c) | 0,8 g |
| Katalysator | siehe Tabelle III |
| | |
| Index | 100 |

| | |
|---|---|
| (a) verzweigtes Polyol mit einer OH-Zahl von 26-30 und einer mittleren Molmasse von 6000 g/mol | |
| (c) Polyethersiloxan | |
| (d) Methylendiphenyldiisocyanat (MDI) mit Anteilen der 4,4- sowie der 2,4-Isomeren | |

**Tabelle III:**

| Kennwerte der Verschäumung | | | | | | | |
|---|---|---|---|---|---|---|---|
| Katalysator | Menge | Cremezeit | Gelierzeit, Beginn | Gelierzeit, Ende | Steigzeit | Dichte | Temperatur |
| | [pphp] | [s] | [s] | [s] | [s] | [kg/m³] | [°C] |
| I (1) | 1,5 | 13 | 55 | 112 | 265 | 41,1 | 20 |
| II (2) | 1,5 | 12 | 48 | 94 | 202 | 41,4 | 20 |
| III (3) | 1,5 | 15 | 36 | 55 | 151 | 42,5 | 20 |
| IV (4) | 1,5 | 14 | 92 | 225 | 350 | 38,1 | 20 |

**Tabelle IV:**

| Einfluß des Katalysators auf die Zugfestigkeit (gemessen nach DIN 53571) des Schaums | |
|---|---|
| Katalysator | Zugfestigkeit [kPa] |
| I (1) | 121 |
| II (2) | 131 |
| III (3) | 100 |
| IV (4) | 107 |

| | |
|---|---|
| (1) erfindungsgemäßer Katalysator nach Beispiel 1 | |
| (2) erfindungsgemäßer Katalysator nach Beispiel 2 | |
| (3) Kaliumacetat | |
| (4) Kalium-2-ethylhexanoat | |

Aus Tabelle IV ist ersichtlich, daß insbesondere die für die Belastung und Haltbarkeit der geschäumten Bauteile besonders ausschlaggebende Zugfestigkeit bei der Verwendung der erfindungsgemäßen Katalysatoren I und II gegenüber den Katalysatoren des Standes der Technik besonders verbessert wird.

## Patentansprüche

1. Verfahren zur Herstellung von Polyurethanen und/oder Polyharnstoffen durch Umsetzung von zumindest einem Polyisocyanat mit zumindest einem Polyol in der Gegenwart einer Katalysator-Zusammensetzung und gegebenenfalls eines Schaumstabilisators, dadurch gekennzeichnet,
daß eine Katalysator-Zusammensetzung eingesetzt wird, die eine oder mehrere Bernsteinsäure-Verbindungen der allgemeinen Formeln I und/oder II 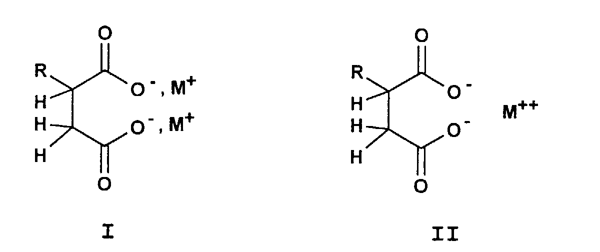 enthält oder daraus besteht, worin R eine verzweigte oder unverzweigte Alkylgruppe mit 1 bis 30 Kohlenstoffatomen, eine verzweigte oder unverzweigte Alkenylgruppe mit 2 bis 30 Kohlenstoffatomen oder eine verzweigte oder unverzweigte Alkylether- oder Alkenylethergruppe mit 2 bis 30 Kohlenstoffatomen und 1 bis 6 Sauerstoffatomen, M⁺ ein Metallkation der ersten Hauptgruppe des Periodensystems und M⁺⁺ ein Metallkation der zweiten Hauptgruppe des Periodensystems bedeuten.

2. Verfahren nach Anspruch 1, worin in Formel I bzw. Formel II R eine Alkylgruppe mit 1 bis 20 Kohlenstoffatomen, eine Alkenylgruppe mit 2 bis 20 Kohlenstoffatomen oder eine Alkylether- oder Alkenylethergruppe mit 2 bis 20 Kohlenstoffatomen und 1 bis 3 Sauerstoffatomen bedeutet.

3. Verfahren nach Anspruch 1, worin in Formel I bzw. Formel II R eine Alkylgruppe mit 1 bis 10 Kohlenstoffatomen oder eine Alkenylgruppe mit 2 bis 10 Kohlenstoffatomen bedeutet.

4. Verfahren nach einem der Ansprüche 1 bis 3, worin in Formel I bzw. Formel II M⁺ das Natriumkation oder das Kaliumkation und M⁺⁺ das Calciumkation oder das Magnesiumkation bedeuten.

5. Verfahren nach einem der Ansprüche 1 bis 3, worin in Formel I M⁺ das Kaliumkation bedeutet.

6. Verfahren nach einem der Ansprüche 1 bis 3, worin in Formel II M⁺⁺ das Magnesiumkation bedeutet.

7. Verfahren nach einem der Ansprüche 1 bis 5, worin als Katalysator-Zusammensetzung eine oder mehrere Bernsteinsäure-Verbindungen der allgemeinen Formel I eingesetzt wird/werden.

8. Verfahren nach einem der Ansprüche 1 bis 4 oder 6, worin als Katalysator-Zusammensetzung eine oder mehrere Bernsteinsäure-Verbindungen der allgemeinen Formel II eingesetzt wird/werden.

9. Verfahren nach einem der Ansprüche 7 oder 8, worin als Katalysator-Zusammensetzung eine oder mehrere Bernsteinsäure-Verbindungen der Formel I oder II eingesetzt wird/werden, deren Rest R ein Tetrapropenyl- oder Hexenyl- Rest ist.

10. Katalysator-Zusammensetzung gemäß einem der Ansprüche 1 bis 9.

## Claims

1. A method for producing polyurethanes and/or polyureas by reacting at least one polyisocyanate with at least one polyol in the presence of a catalyst composition and optionally a foam stabilizer, characterized in that a catalyst composition is used which contains or consists of one or more succinic acid compounds with the general formulas I and/or II 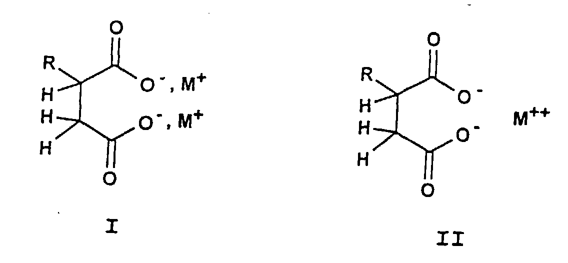 where R represents a branched or unbranched alkyl group with 1 to 30 carbon atoms, a branched or unbranched alkenyl group with 2 to 30 carbon atoms or a branched or unbranched alkyl ether or alkenyl ether group with 2 to 30 carbon atoms and 1 to 6 oxygen atoms, M⁺ a metal cation of the first main group of the periodic system and M⁺⁺ a metal cation of the second main group of the periodic system.

2. The method of claim 1, wherein in Formula I and Formula II R represents an alkyl group with 1 to 20 carbon atoms, an alkenyl group with 2 to 20 carbon atoms or an alkyl ether or alkenyl ether group with 2 to 20 carbon atoms and 1 to 3 oxygen atoms.

3. The method of claim 1, wherein in Formula I and Formula II R represents an alkyl group with 1 to 10 carbon atoms or an alkenyl group with 2 to 10 carbon atoms.

4. The method of any of claims 1 to 3, wherein in Formula I and Formula II M⁺ represents the sodium cation or the potassium cation and M⁺⁺ the calcium cation or the magnesium cation.

5. , The method of any of claims 1 to 3, wherein in Formula I M⁺ represents the potassium cation.

6. The method of any of claims 1 to 3, wherein in Formula II M⁺⁺ represents the magnesium cation.

7. The method of any of claims 1 to 5, wherein the catalyst composition used is one or more succinic acid compounds with the general Formula I.

8. The method of any of claims 1 to 4 or 6, wherein the catalyst composition used is one or more succinic acid compounds with the general Formula II.

9. The method of either of claims 7 and 8, wherein the catalyst composition used is one or more succinic acid compounds with Formula I or II whose residue R is a tetrapropenyl or hexenyl residue.

10. A catalyst composition according to any of claims 1 to 9.

## Revendications

1. Procédé de préparation de polyuréthanes et/ou de polyurées par réaction d'au moins un polyisocyanate avec au moins un polyol en présence d'une composition de catalyseur et éventuellement d'un stabilisant de mousse, caractérisé en ce que l'on utilise une composition de catalyseur qui contient un ou plusieurs dérivés d'acide succinique de formule générale I et/ou II ou en est constituée 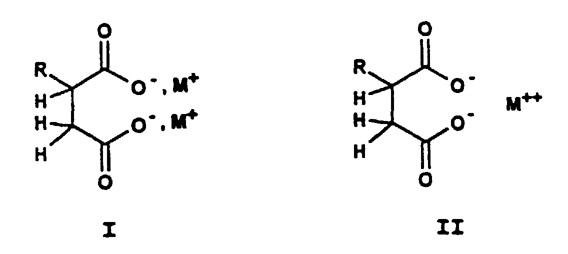 où R représente un groupe alkyle linéaire ou ramifié de 1 à 30 atomes de carbone, un groupe alcényle linéaire ou ramifié de 2 à 30 atomes de carbone ou un groupe éther d'alkyle ou éther d'alcényle linéaire ou ramifié de 2 à 30 atomes de carbone et 1 à 6 atomes d'oxygène, M⁺ est un cation métallique du premier groupe principal du système périodique et M⁺⁺ est un cation métallique du deuxième groupe principal du système périodique.

2. Procédé selon la revendication 1, dans lequel, dans la formule I ou la formule II, R représente un groupe alkyle de 1 à 20 atomes de carbone, un groupe alcényle de 2 à 20 atomes de carbone ou un groupe éther d'alkyle ou éther d'alcényle de 2 à 20 atomes de carbone et 1 à 3 atomes d'oxygène.

3. Procédé selon la revendication 1, dans lequel, dans la formule I ou la formule II, R représente un groupe alkyle de 1 à 10 atomes de carbone ou un groupe alcényle de 2 à 10 atomes de carbone.

4. Procédé selon l'une des revendications 1 à 3, dans lequel, dans la formule I ou la formule II, M⁺ est le cation sodium ou le cation potassium et M⁺⁺ est le cation calcium ou le cation magnésium.

5. Procédé selon l'une des revendications 1 à 3 dans lequel, dans la formule I, M⁺ représente le cation potassium.

6. Procédé selon l'une des revendications 1 à 3 dans lequel, dans la formule II, M⁺⁺ représente le cation magnésium.

7. Procédé selon l'une des revendications 1 à 5, dans lequel on utilise comme composition de catalyseur un ou plusieurs dérivés d'acide succinique de formule générale I.

8. Procédé selon l'une des revendications 1 à 4 ou 6, dans lequel on utilise comme composition de catalyseur un ou plusieurs dérivés d'acide succinique de formule générale II.

9. Procédé selon l'une des revendications 7 ou 8, dans lequel on utilise comme composition de catalyseur un ou plusieurs dérivés d'acide succinique de formule I ou II dont le reste R est un reste tétrapropényle ou hexényle.

10. Composition de catalyseur selon l'une des revendications 1 à 9.
